(19) **Europäisches Patentamt / European Patent Office / Office européen des brevets**

(11) **EP 1 544 535 B1**

(12) **EUROPÄISCHE PATENTSCHRIFT**

(45) Veröffentlichungstag und Bekanntmachung des Hinweises auf die Patenterteilung:
**30.07.2008 Patentblatt 2008/31**

(51) Int Cl.:
*F16P 3/14* (2006.01)

(21) Anmeldenummer: **04029035.5**

(22) Anmeldetag: **08.12.2004**

(54) **Vorrichtung zur Überwachung eines Erfassungsbereichs an einem Arbeitsmittel**

Device for the surveillance of the reach area in a worktool

Dispositif de surveillance de la zone dans la portée d'un outil de travail

(84) Benannte Vertragsstaaten:
**AT CH DE FR GB LI**

(30) Priorität: **20.12.2003 DE 10360174**

(43) Veröffentlichungstag der Anmeldung:
**22.06.2005 Patentblatt 2005/25**

(73) Patentinhaber: **Leuze lumiflex GmbH + Co. KG**
**82256 Fürstenfeldbruck (DE)**

(72) Erfinder: **Lohmann, Lutz, Dr.**
**82140 Olching (DE)**

(74) Vertreter: **Ruckh, Rainer Gerhard**
**Fabrikstrasse 18**
**73277 Owen/Teck (DE)**

(56) Entgegenhaltungen:
EP-A- 1 367 314          DE-A1- 4 414 434
DE-C1- 19 619 186        US-A1- 2003 123 707
US-B1- 6 373 557

**Beschreibung**

Die Erfindung betrifft eine Vorrichtung zur Überwachung eines Erfassungsbereichs an einem Arbeitsmittel.

Das Arbeitsmittel kann ein mobiles System bilden. Beispiele für derartige Arbeitsmittel sind Transportfahrzeuge wie Flurförderfahrzeuge. Bei derartigen Systemen muss als Erfassungsbereich das Vorfeld des Transportfahrzeugs überwacht werden, um Kollisionen mit Personen oder Gegenständen zu vermeiden. Die Arbeitsmittel können weiterhin stationäre Systeme wie Maschinen bilden, wobei in diesem Fall Maschinenteile gefahrbringende Bewegungen ausführen. In diesem Fall ist der zu überwachende Erfassungsbereich so zu dimensionieren, dass die Bereiche in welchen gefahrbringende Bewegungen ausgeführt werden, überwacht werden können. Ein Beispiel für ein derartiges Arbeitsmittel ist ein Montageroboter, welcher zum Montieren von Werkstücken dient. Derartige Montageroboter stellen ein hohes Gefahrenpotential für die jeweilige Bedienperson dar, da diese die Werkstücke üblicherweise manuell am Montageroboter einführen muss.

Zur Absicherung derartiger Erfassungsbereiche werden üblicherweise Schutzeinrichtungen eingesetzt, die bei einem unkontrollierten Eingriff der Bedienperson in einen derartigen Erfassungsbereich das Arbeitsmittel außer Betrieb setzen.

Derartige Schutzeinrichtungen können insbesondere als Zweihandschaltungen ausgebildet sein. Diese Zweihandschaltungen schützen die Hände der Bedienperson dadurch, dass zum Auslösen und Aufrechterhalten einer gefahrbringenden Bewegung zwei Hebel aktiv betätigt werden müssen. Dadurch muss die Bedienperson beide Hände an den Hebeln halten und ist so bei der Bedienung eines Arbeitsmittels vor Verletzungen geschützt. Nachteilig hierbei ist jedoch, dass weitere Personen im Erfassungsbereich ungeschützt sind.

Für den Fall, dass das Arbeitsmittel als Montageroboter ausgebildet ist, ist zudem nachteilig, dass sich der Arbeitstakt des Montageroboters verringert, wodurch dessen Verfügbarkeit unnötig eingeschränkt wird.

Weiterhin werden als Schutzeinrichtungen Sicherheits-Lichtvorhänge eingesetzt. Ein derartiger Sicherheits-Lichtvorhang ist beispielsweise aus der DE 39 39 191 C3 bekannt. Diese Sicherheits-Lichtvorhänge bestehen aus mehreren Paaren von Sendern und Empfängern, welche jeweils eine Lichtschranke bilden. Mit derartigen Schutzeinrichtungen wird ein ebener, zweidimensionaler Überwachungsbereich abgedeckt.

Nachteilig bei derartigen Schutzeinrichtungen ist, dass zu einer kompletten Absicherung des Erfassungsbereichs an einem Montageroboter, insbesondere hinsichtlich des Zugriffsschutzes und der Bereichssicherung eine Vielzahl von Schutzeinrichtungen benötigt wird. Dies stellt nicht nur einen unerwünscht hohen Kostenaufwand dar, sondern erfordert auch eine aufwendige Montage, wobei oftmals nur unzureichend Platz für deren Anbringung zur Verfügung steht.

Weiterhin ist nachteilig, dass derartige Schutzeinrichtungen nicht zur Überwachung von Erfassungsbereichen an mobilen Arbeitsgeräten geeignet sind.

Die EP 0 902 402 A2 betrifft ein Verfahren zur optischen Überwachung eines Raumbereichs, insbesondere des Türbereichs eines Aufzuges. Der Raumbereich wird mittels einer Kamera überwacht. Alternativ können mehrere Kameras vorgesehen sein, mittels derer jeweils unterschiedliche Segmente des Raumbereiches überwacht werden. Die oder jede Kamera ist als digitale Kamera ausgebildet und weist ein Kameramodul, einen A/D-Wandler, eine Auswerteeinheit, einen Mikroprozessor und einen Bildspeicher auf Zur Überwachung des Raumbereiches erfolgt in der Auswerteeinheit ein pixelweiser Vergleich von Grauwerten eines aktuellen Bildes mit Grauwerten eines Referenzbildes. Dabei werden die Differenzen zwischen den Grauwerten des aktuellen Bildes und den Grauwerten des Referenzbildes gebildet. Zudem überwacht der Mikroprozessor die Funktionsfähigkeit der Kamera dadurch, dass das Unter- und/oder Überschreiten einer Grundhelligkeit des aktuellen Bildes festgestellt wird.

Nachteilig hierbei ist, dass der Referenzbildvergleich umgebungsabhängig und damit störanfällig ist. Insbesondere Fremdlichteinflüsse können zu Fehldetektionen bei der Objekterfassung führen.

Die EP 1 367 314 A2 betrifft eine Vorrichtung zur Überwachung eines Erfassungsbereiches an einem Arbeitsmittel. Die Vorrichtung weist wenigstens ein redundantes Kamerasystem bestehend aus zwei Kameras sowie einen diesen vorgeordneten Strahlteiler auf, über welchen Bilder des Erfassungsbereichs auf beide Kameras zur Erfassung von sicherheitskritischen Objekten innerhalb wenigstens einer Schutzzone abbildbar sind. Weiterhin weist die Vorrichtung zwei Rechnereinheiten auf Eine Rechnereinheit ist an eine der Kameras zur Auswertung der dort erfassten Bildinformationen angeschlossen. Beide Rechnereinheiten sind zur gegenseitigen Überprüfung miteinander gekoppelt und weisen wenigstens einen von den Rechnereinheiten angesteuerten Schaltausgang auf, über welchen das Arbeitsmittel nur dann in Betrieb gesetzt ist, falls sich kein sicherheitskritisches Objekt innerhalb der Schutzzone befindet.

Die US 6,373,557 B1 betrifft eine Vorrichtung zur Generierung dreidimensionaler Bilder von Objekten, welche als Sendereinheiten Laserdioden und als Empfangseinheit eine Matrix-Kamera aufweist. Mit diesen Einheiten wird eine Entfernungsmessung nach dem Puls-Laufzeit-Verfahren durchgeführt.

Der Erfindung liegt die Aufgabe zugrunde, ein System zu schaffen, welches eine sichere Überwachung eines Erfassungsbereiches sowohl an stationären als auch an mobilen Arbeitsmitteln gewährleistet.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zur Überwachung eines Erfassungsbereichs an einem Arbeitsmittel. Die Vorrichtung weist eine Lichtstrahlen emittierende Beleuchtungseinheit zur Beleuchtung des Erfassungsbereichs auf. Ebenso beinhaltet die erfindungsgemäße Vorrichtung eine Kamera zur Ermittlung dreidimensionaler Bilder des Erfassungsbereichs. Mit einer Auswerteeinheit wird ein auf das Arbeitsmittel geführter Schaltausgang angesteuert, so dass das Arbeitsmittels nur dann in Betrieb gesetzt ist, falls sich kein Objekt im Erfassungsbereich befindet. Die Kamera weist eine matrixförmige Anordnung von Empfangselementen auf, deren Ausgangssignale in der Auswerteeinheit ausgewertet werden. Für jedes Empfangselement wird ein Distanzwert aus der Lichtlaufzeit der von der Beleuchtungseinheit emittierten und aus dem Erfassungsbereich zurückreflektierten Lichtstrahlen ermittelt. Die von der Beleuchtungseinheit und der Kamera gebildete Sensoreinheit weist einen einkanaligen Aufbau auf und ist durch eine Eigenfehlerkontrolle selbstsicher.

Bei einer nach einem Puls-Laufzeit-Verfahren arbeitenden Sensoreinheit werden zur Eigenfehlerkontrolle die vom Sender emittierten Lichtimpulse um vorgegebene Zeiten verzögert und die dadurch veränderten Distanzwerte der Empfangselemente ausgewertet. Bei einer nach dem Phasenmessverfahren arbeitenden Sensoreinheit wird zur Eigenfehlerkontrolle die Phase der den Lichtstrahlen aufgeprägten Amplitudenmodulation verschoben und es werden dadurch veränderte Distanzwerte der Empfangselemente ausgewertet.

Die erfindungsgemäße Vorrichtung wird insbesondere im Bereich des Personenschutzes eingesetzt. Zur Erfüllung des geforderten Sicherheitsniveaus ist die Sensoreinheit der Vorrichtung selbstsicher ausgeführt, in dem in der Sensoreinheit eine Eigenfehlerkontrolle durchgeführt wird. Vorteilhaft hierbei ist, dass die Sensoreinheit hierbei einen einkanaligen Aufbau aufweisen kann. Demgegenüber weist die der Sensoreinheit nachgeordnete Auswerteeinheit bevorzugt einen zweikanaligen Aufbau auf.

Ein wesentlicher Vorteil der erfindungsgemäßen Vorrichtung besteht darin, dass mit der Kamera nicht nur eine zweidimensionale Flächeninformation von dem zu überwachenden Erfassungsbereich, sondern durch die durchgeführten Distanzmessungen zusätzlich eine Tiefeninformation erhalten wird. Damit kann eine Objekterfassung innerhalb des Erfassungsbereichs ohne Durchführung eines Referenzbildvergleichs durchgeführt werden. Insbesondere können auch Objekte vor einem Hintergrund sicher erfasst werden, wobei die Objektdetektion weitgehend unabhängig von Umgebungseinflüssen wie der Beschaffenheit des Hintergrunds oder Fremdlichteinstrahlungen ist.

Weiterhin ist vorteilhaft, dass die erfindungsgemäße Vorrichtung eine kompakte Baueinheit bildet, die zur Überwachung von Erfassungsbereichen an mobilen und stationären Arbeitsmitteln eingesetzt werden kann. Insbesondere kann die erfindungsgemäße Vorrichtung an Roboterarmen angebracht werden, um bei Robotern den Gefahrenbereich im Umfeld des Roboterarmes zu erfassen. Weiterhin kann die erfindungsgemäße Vorrichtung an Transportfahrzeugen wie zum Beispiel Flurförderfahrzeugen angebracht werden, so dass das Vorfeld dieser Fahrzeuge als Erfassungsbereich überwacht wird.

Zum Schutz von Personen und Gegenständen wird mittels der erfindungsgemäßen Vorrichtung das Arbeitsmittel außer Betrieb gesetzt, wenn ein Objekteingriff im Erfassungsbereich registriert wird. Im einfachsten Fall erfolgt die Deaktivierung des Arbeitsmittels dann, wenn ein beliebiges Objekt in den Erfassungsbereich eindringt. Generell kann eine Deaktivierung des Arbeitsmittels über die erfindungsgemäße Vorrichtung erfolgen, wenn ein Objekt oder speziell ein sicherheitskritisches Objekt innerhalb des gesamten Erfassungsbereichs detektiert wird.

Alternativ können auch innerhalb des Erfassungsbereichs Schutzzonen und nicht sicherheitskritische Bereiche definiert werden, wobei nur Objekterfassungen in den nicht sicherheitskritischen Bereichen nicht zur Deaktivierung des Arbeitsmittels führen. Durch ein derartiges Ausblenden von Bereichen wird die Verfügbarkeit des Arbeitsmittels erhöht, da unnötige Stillstandszeiten infolge von Abschaltbefehlen aufgrund von Objektdetektionen in diesen Bereichen vermieden werden.

In einer vorteilhaften Ausführungsform der Erfindung erfolgt eine Unterscheidung von sicherheitskritischen Objekten und nicht sicherheitskritischen Objekten. Nicht sicherheitskritische Objekte können beispielsweise von zu bearbeitenden Werkstücken, Maschinenteilen, stationären Gebäudeteilen und dergleichen gebildet sein. Derartige nicht sicherheitskritische Objekte führen generell zu keiner Gefährdung für Personen. Damit würde ein durch die Detektion derartiger nicht sicherheitskritischer Objekte bewirktes Deaktivieren des Arbeitsmittels eine unnötige Stillstandszeit und damit eine Reduzierung der Verfügbarkeit des Arbeitsmittels bedeuten.

Zweckmäßigerweise werden die Konturen und gegebenenfalls auch die Bahnen derartiger nicht sicherheitskritischer Objekte in einem Einlernvorgang eingelernt. Dann werden während der an den Einlernvorgang anschließenden Betriebsphase sämtliche Objekte, die nicht den eingelernten nicht sicherheitskritischen Objekte entsprechen, als sicherheitskritische Objekte klassifiziert, so dass deren Erfassung innerhalb des Erfassungsbereichs zu einem Deaktivieren des Arbeitsmittels führt. Damit wird ein Höchstmaß an Sicherheit bei der Überwachung des Erfassungsbereichs gewährleistet, da nur die zuvor eingelernten nicht sicherheitskritischen Objekte bei Eindringen in den Erfassungsbereich nicht zu einer Deaktivierung des Arbeitsmittels führen.

Die Erfindung wird im Nachstehenden anhand der Zeichnungen erläutert. Es zeigen:

Figur 1: Schematische Darstellung der optischen Komponenten einer Vorrichtung zur Erfassung von Objekten.

Figur 2: Blockschaltbild der Vorrichtung gemäß Figur 1.

Figur 3: Zeitdiagramme zur Distanzbestimmung nach dem Puls-Laufzeit-Verfahren für die Vorrichtung gemäß Figur 1.

Figur 4: Anordnung einer Vorrichtung gemäß den Figuren 1 und 2 an einem Flurförderfahrzeug.

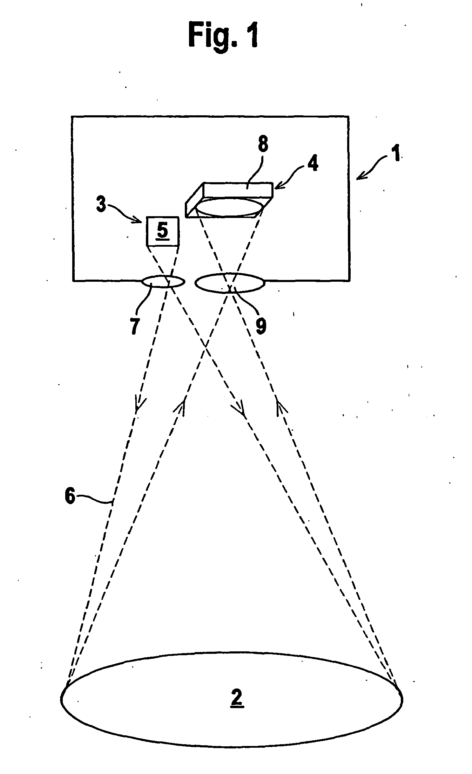

Figur 1 zeigt schematisch die optischen Komponenten einer Vorrichtung 1 zur Überwachung eines Erfassungsbereichs 2 an einem Arbeitsmittel. Das in Figur 1 nicht dargestellte Arbeitsmittel ist von einer Maschine, einer Anlage oder einem Fahrzeug gebildet. Durch Arbeitsvorgänge, die mit dem Arbeitsmittel durchgeführt werden, entsteht im Bereich des Arbeitsmittels ein Gefahrenbereich, welcher innerhalb des Erfassungsbereichs 2 von der Vorrichtung 1 überwacht wird.

Die optischen Komponenten der Vorrichtung 1 bilden eine Sensoreinheit bestehend aus einer Beleuchtungseinheit 3 und einer Kamera 4. Die Beleuchtungseinheit 3 weist im vorliegenden Fall einen als Laserdiode ausgebildeten Sender 5 auf, welcher Lichtstrahlen 6 emittiert. Alternativ kann der Sender 5 von einer Leuchtdiode gebildet sein. Weiterhin kann die Beleuchtungseinheit 3 auch Anordnungen von mehreren Laserdioden oder Leuchtdioden aufweisen. Die Beleuchtungseinheit 3 weist als weitere Komponente eine dem Sender 5 nachgeordnete Sendeoptik 7 auf. Mit der Sendeoptik 7 erfolgt eine Strahlformung der Lichtstrahlen 6 derart, dass mit den Lichtstrahlen 6 der zu überwachende Erfassungsbereich 2 komplett ausgeleuchtet wird.

Die Kamera 4 weist eine matrixförmige, insbesondere rechteckige oder quadratische Anordnung von Empfangselementen auf. Im vorliegenden Fall weist die Kamera 4 einen CMOS-Chip 8 mit einer rechteckigen Anordnung von Empfangselementen auf. Alternativ kann die Kamera 4 einen entsprechenden CCD-Chip aufweisen.

Die Kamera 4 weist weiterhin eine dem CMOS-Chip 8 vorgeordnete Empfangsoptik 9 auf. Mittels der Empfangsoptik 9 werden die aus dem Erfassungsbereich 2 zurückreflektierten Lichtstrahlen 6 auf die Empfangselemente des CMOS-Chips 8 fokussiert.

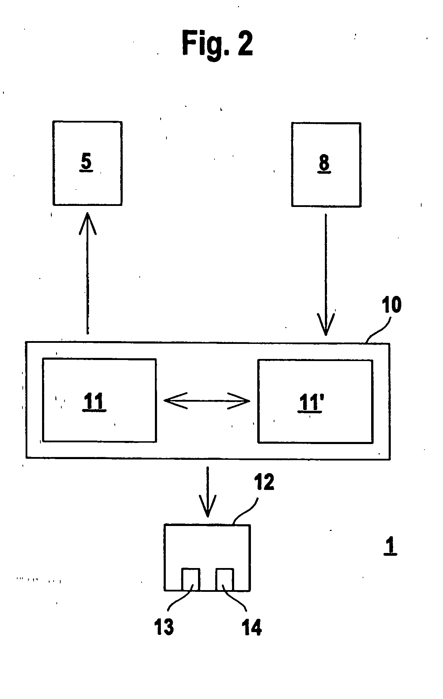

Figur 2 zeigt ein Blockschaltbild der Vorrichtung 1 gemäß Figur 1. Der Sender 5 der Beleuchtungseinheit 3 und die Kamera 4 sind an eine zweikanalige Auswerteeinheit 10 angeschlossen, die im vorliegenden Fall von zwei identischen sich gegenseitig überwachenden Rechnereinheiten 11, 11' gebildet ist.

Mit der Auswerteeinheit 10 wird einerseits die Beleuchtungseinheit 3 angesteuert. Andererseits erfolgt in der Auswerteeinheit 10 die Auswertung der Ausgangssignale der Empfangselemente der Kamera 4. Dabei werden zur Ermittlung dreidimensionaler Bilder des Erfassungsbereichs 2 beziehungsweise von im Erfassungsbereich 2 angeordneten Objekten für sämtliche Empfangselemente fortlaufend jeweils ein Distanzwert aus der Lichtlaufzeit der von der Beleuchtungseinheit 3 emittierten und aus dem Erfassungsbereich 2 zurückreflektierten Lichtstrahlen 6 ermittelt.

An die Auswerteeinheit 10 ist eine Ausgangsschaltung 12 mit einem Schaltausgang 13 und einem Warnausgang 14 angeschlossen.

In der Auswerteeinheit 10 wird in Abhängigkeit der Auswertung der Ausgangssignale der Empfangselemente ein binäres Schaltsignal generiert und über den Schaltausgang 13 ausgegeben, mittels dessen das Arbeitsmittel aktivierbar oder deaktivierbar ist. Bei der Detektion eines Objekteingriffs im Erfassungsbereich 2 wird ein Schaltzustand des Schaltsignals generiert, der zur Deaktivierung, das heißt zum Außerbetriebsetzen des Arbeitsmittels führt. Weiterhin wird in der Auswerteeinheit 10 bei Bedarf ein Warnsignal generiert, welches über den Warnausgang 14 ausgebbar ist.

Gemäß einer ersten Variante erfolgt die Distanzmessung mit der Sensoreinheit nach einem Phasenmessverfahren. Zur Durchführung der Phasenmessung ist den Lichtstrahlen 6 des Senders 5 eine Amplitudenmodulation mit einer vorgegebenen Modulationsfrequenz aufgeprägt. Zur Erhöhung des Eindeutigkeitsbereichs der Phasenmessung und damit des erfassbaren Distanzbereichs können den Lichtstrahlen 6 auch mehrere Amplitudenmodulationen mit unterschiedlichen Modulationsfrequenzen aufgeprägt sein. Bei der Phasenmessung wird für jedes Empfangselement des CMOS-Chips 8 die Phasendifferenz der dort auftreffenden, aus dem Erfassungsbereich 2 zurückreflektierten Lichtstrahlen 6 bezüglich der vom Sender 5 emittierten Lichtstrahlen 6 ermittelt. Aus diesen Phasendifferenzen werden in der Auswerteeinheit 10 jeweils Distanzwerte berechnet. Aus der Gesamtheit des für die Empfangselemente ermittelten Distanzwerte werden dreidimensionale Bilder von Objekten im Überwachungsbereich erhalten.

Gemäß einer zweiten Variante erfolgt die Distanzmessung mit der Sensoreinheit nach einem Puls-Laufzeit-Verfahren. In diesem Fall emittiert der Sender 5 Lichtstrahlen 6 in Form von Lichtimpulsen. Zur Distanzbestimmung wird dabei für jedes Empfangselement die Laufzeit jeweils eines Lichtimpulses vom Sender 5 zum Erfassungsbereich 2 und zurück zur Kamera 4 ausgewertet. Aus der Gesamtheit aller Distanzwerte für die einzelnen Empfangselemente werden dann wieder dreidimensionale Bilder von Objekten innerhalb des Erfassungsbereichs 2 erhalten.

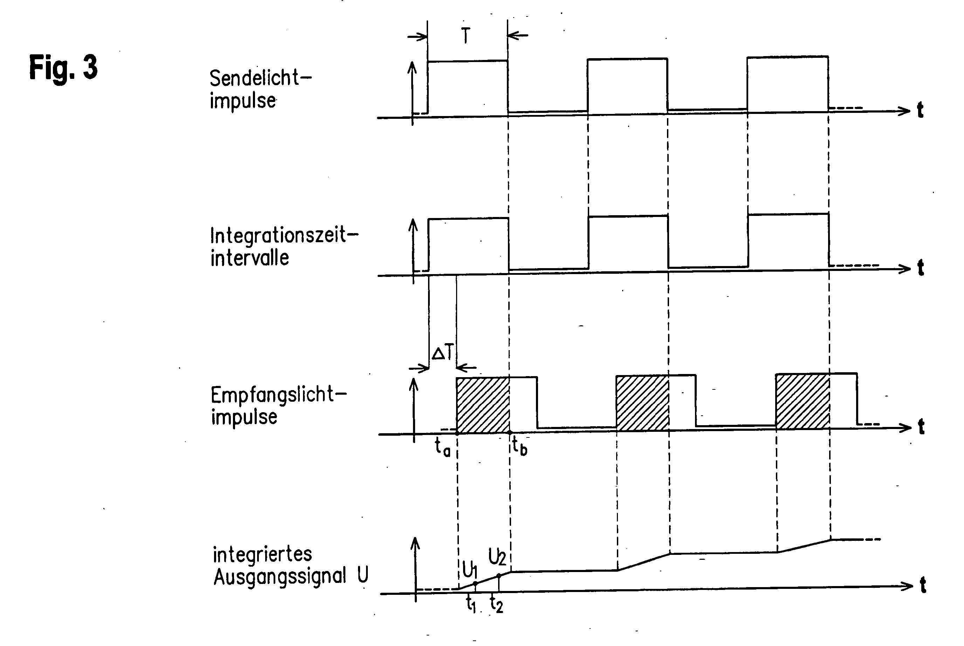

Figur 3 zeigt schematisch das Prinzip der Distanzmessung nach einem Puls-Laufzeit-Verfahren. Das erste Diagramm in Figur 3 zeigt die Folge der vom Sender 5 emittierten Lichtimpulse, in Figur 3 als Sendelichtimpulse bezeichnet. Die Sendelichtimpulse weisen jeweils dieselbe Pulsdauer T auf. Auch die Pulspausen zwischen zwei Sendelichtimpulsen sind konstant. Das dritte Diagramm in Figur 3 zeigt die vom Sender 5 emittierten und von einem Objekt im Abstand d zur Vorrichtung 1 auf ein Empfangselement zurückreflektierten Lichtimpulse, in Figur 3 als Empfangslichtimpulse bezeichnet. Entsprechend der Lichtlaufzeit eines Lichtimpulses vom Sender 5 zum Objekt und zurück zum Empfangselement ist jeder Empfangslichtimpuls gegenüber dem zugehörigen Sendelichtimpuls um die Zeitdauer $\Delta T = 2d/c$ verzögert. Dabei ist d die Distanz des Objekts zur Vorrichtung 1 und c die Lichtgeschwindigkeit. Zur Distanzbestimmung kann die Zeitdauer $\Delta T$ prinzipiell durch ein Zählverfahren ermittelt werden. Dabei wird mit der Emission eines Sendelichtimpulses, vorzugsweise mit dessen steigender Flanke, ein durch einen Oszillator gesteuerter Zähler gestartet. Mit dem Empfang des zugehörigen Empfangslichtimpulses, vorzugsweise mit deren steigender Flanke, wird der Zähler gestoppt.

Im vorliegenden Fall wird die Zeitdauer $\Delta T$ mittels eines Integrationsverfahrens bestimmt. Das zweite Diagramm in Figur 3 zeigt Folgen von Integrationsintervallen, während derer das durch den jeweiligen Empfangslichtimpuls am Empfangselement generierte Ausgangssignal aufintegriert wird. Wie aus Figur 3 ersichtlich erstrecken sich die einzelnen Integrationsintervalle jeweils über die Dauer eines Sendelichtimpulses, das heißt das Ausgangssignal am Empfangselement wird jeweils nur während der Emission eines Sendelichtimpulses integriert. Da jeder Empfangslichtimpuls bezüglich des zugehörigen Sendelichtimpulses um $\Delta T$ verzögert ist, fällt jeweils nur ein Teil des Empfangslichtimpulses in das entsprechende Integrationsintervall. Dementsprechend wird beispielsweise für den ersten Empfangslichtimpuls das Ausgangssignal nur während des Zeitintervalls zwischen $t_a$ und $t_b$ aufintegriert.

Das so erhaltene integrierte Ausgangssignal U ist im vierten Diagramm von Figur 3 dargestellt.

Zur Ermittlung von $\Delta T$ werden innerhalb jedes Integrationsintervalls zwei Messpunkte des integrierten Ausgangssignals ausgewählt. Die Lage der Messpunkte wird dabei so gewählt, dass diese in einem Zeitintervall liegen, innerhalb dessen gerade der Empfangslichtimpuls auf das Empfangselement auftrifft.

Für das erste Integrationsintervall werden die Messpunkte $U_1$, $U_2$ zu den Zeiten $t_1$, $t_2$ gewählt. Aus diesen Messpunkten wird $\Delta T$ gemäß folgender Beziehung ermittelt:

$$\Delta T = (U_2\, t_1 - U_1\, t_2) / (U_2 - U_1)$$

Anhand der für die einzelnen Empfangselemente der Kamera 4 durchgeführten Distanzmessungen werden dreidimensionale Bilder von Objekten erhalten, anhand derer insbesondere Objekte auch vor Hintergrundflächen beliebiger Oberflächenbeschaffenheit detektiert werden können.

Für den Einsatz der Vorrichtung 1 im Bereich des Personenschutzes muss diese den Anforderungen des entsprechenden Sicherheitsniveaus genügen. Hierzu weist die Auswerteeinheit 10 einen redundanten, zweikanaligen Aufbau mit zwei sich gegenseitig überwachenden Rechnereinheiten 11,11' auf.

Die Sensoreinheit, insbesondere die Kamera 4 weist einen einkanaligen Aufbau auf. Zur Erzielung des geforderten Sicherheitsniveaus wird für die Sensoreinheit eine Eigenfehlerkontrolle durchgeführt, so dass diese selbstsicher ist.

Für den Fall, dass die Distanzmessung bei der Vorrichtung 1 nach einem Puls-Laufzeit-Verfahren erfolgt, wird zur Durchführung der Eigenfehlerkontrolle in vorgegebenen Zeitabständen die Aussendung eines Sendelichtimpulses verzögert und die dadurch bewirkte Veränderung der Distanzmessung für die einzelnen Empfangselemente in der Auswerteeinheit 10 kontrolliert.

Entsprechend wird für den Fall, dass die Distanzmessung nach einem Phasenmessverfahren erfolgt, die Phase der den Lichtstrahlen 6 aufgeprägten Amplitudenmodulation verschoben und die dadurch bewirkte Veränderung der Distanzmessung für die einzelnen Empfangselemente kontrolliert.

Bei der Objektdetektion mittels der Vorrichtung 1 kann in der Auswerteeinheit 10 generell ein Schaltsignal zur Deaktivierung des Arbeitsmittels generiert werden, wenn ein beliebiges Objekt im Erfassungsbereich 2 registriert wird.

Alternativ können mit der Vorrichtung 1 sicherheitskritische Objekte und nicht sicherheitskritische Objekte unterschieden werden, wobei nur das Eindringen von sicherheitskritischen Objekten in den Erfassungsbereich 2 zur Deaktivierung des Arbeitsmittels führt.

Derartige nicht sicherheitskritische Objekte können beispielsweise von Maschinenteilen, insbesondere Teilen des Arbeitsmittels, Werkstücken, die mittels des Arbeitsmittels bearbeitet werden, oder auch von stationären Teilen wie Gebäudeteilen gebildet sein. Generell führt ein Eingriff derartiger nicht sicherheitskritischer Objekte in den Erfassungsbereich 2 nicht zu einer Gefährdung, insbesondere von Personen.

Um ein unnötiges Außerbetriebsetzen des Arbeitsmittels bei Eindringen eines nicht sicherheitskritischen Objektes in den Erfassungsbereich 2 zu vermeiden, werden während eines Einlernvorgangs die Konturen und gegebenenfalls die Bahnen von nicht sicherheitskritischen Objekten, falls sich diese immer entlang derartiger Bahnen bewegen, erfasst und in der Auswerteeinheit 10 abgespeichert.

Während des nachfolgenden Betriebs der Vorrichtung 1 werden im Erfassungsbereich 2 detektierte Objekte mit den abgespeicherten nicht sicherheitskritischen Objekten beziehungsweise gegebenenfalls deren Bahnen in der Auswerteeinheit 10 verglichen. Wird dabei keine Übereinstimmung eines detektierten Objektes mit einem nicht sicherheitskritischen Objekt festgestellt, wird das detektierte Objekt als sicherheitskritisches Objekt klassifiziert und ein Schaltsignal zur Außerbetriebsetzung des Arbeitsmittels generiert.

Die Vorrichtung 1 kann an stationären und insbesondere an mobilen Arbeitsmitteln zur Absicherung von Gefahrenbereichen im Bereich dieser Arbeitsmittel angeordnet sein. Beispielsweise kann die Vorrichtung 1 an einem Roboterarm angeordnet sein, wobei in diesem Fall der Roboter das Arbeitsmittel bildet und durch Bewegungen des Roboterarms Gefährdungen für Personen entstehen können.

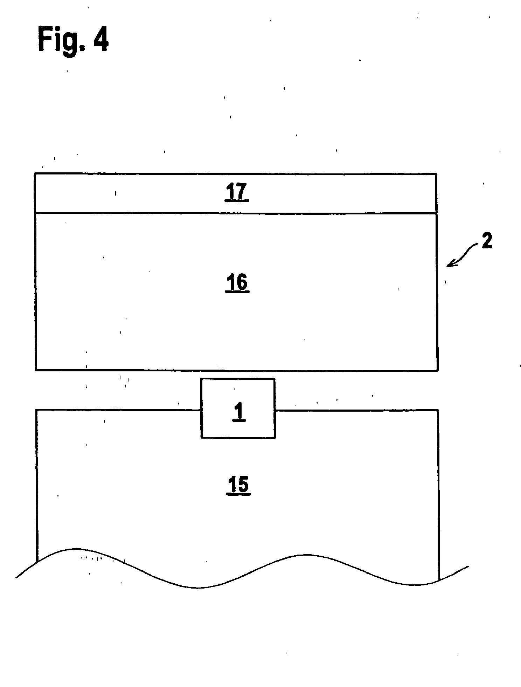

Figur 4 zeigt schematisch eine Anordnung der Vorrichtung 1 an einem ein Arbeitsmittel bildenden Flurförderfahrzeug 15. Dabei ist die Vorrichtung 1 an der Frontseite des FlurFörderfahrzeugs 15 montiert. Der von der Vorrichtung 1 überwachte Erfassungsbereich 2 umfasst das Vorfeld vor dem Flurförderfahrzeug 15. Die Vorrichtung 1 dient damit zur Vermeidung von Kollisionen des Flurförderfahrzeugs 15 mit Personen und Gegenständen. Hierzu kann in der Vorrichtung 1 prinzipiell dann ein Schaltsignal zum Anhalten des Flurförderfahrzeugs 15, das heißt zum Deaktivieren des Arbeitsmittels generiert werden, falls ein Objekt oder ein sicherheitskritisches Objekt im Erfassungsbereich 2 registriert wird.

Bei dem Ausführungsbeispiel ist der Erfassungsbereich 2 in ein Schutzfeld 16 und einen nicht sicherheitskritischen Bereich unterteilt, wobei dieser Bereich im vorliegenden Fall eine Warnzone 17 bildet. Generell ist auch eine Aufteilung des Erfassungsbereichs 2 in mehrere Schutzfelder 16 und/oder nicht sicherheitskritische Bereiche möglich.

Dabei erfolgt eine Generierung eines Schaltsignals zur Deaktivierung des Arbeitsmittels nur dann, wenn ein Objekt beziehungsweise ein sicherheitskritisches Objekt, in dem oder in einem Schutzfeld 16 innerhalb des Erfassungsbereichs 2 registriert wird. Bei einem Objekteingriff in einen nicht sicherheitskritischen Bereich erfolgt jedoch keine Deaktivierung des Arbeitsmittels.

Im vorliegenden Fall ist der nicht sicherheitskritische Bereich als Warnzone 17 ausgebildet. Dies bedeutet, dass bei einem Objekteingriff in der Warnzone 17 ein Warnsignal generiert wird, welches über den Warnausgang 14 ausgegeben wird.

Wie aus Figur 4 ersichtlich umfasst das Schutzfeld 16 den unmittelbaren Nahbereich vor dem Flurförderfahrzeug 15, während der nicht sicherheitskritische Bereich zu großen Distanzen hin an das Schutzfeld 16 anschließt. Dabei wird dem Umstand Rechnung getragen, dass eine Gefahr für Personen dann vorliegt, falls sich diese unmittelbar vor dem Fahrzeug aufhalten.

In einer vorteilhaften Ausführungsform wird die Segmentierung des Erfassungsbereichs 2 in das Schutzfeld 16 und die Warnzone 17 abhängig von der Geschwindigkeit des Flurförderfahrzeugs 15 gewählt. Dabei ist die Schutzzone im Vergleich zur Warnzone 17 um so größer, je größer die Fahrzeuggeschwindigkeit ist.

Generell kann die Definition von Schutzfeldern 16 und nicht sicherheitskritischen Bereichen in Abhängigkeit externer Sensoren, sogenannter Muting-Sensoren; erfolgen.

Weiterhin kann die Definition von Schutzfeldern 16 und nicht sicherheitskritischen Bereichen als ausgeblendeten Zonen, sogenannten Blanking-Bereichen, in Abhängigkeit der Positionen von sicherheitskritischen Objekten oder nicht sicherheitskritischen Objekten, insbesondere in Abhängigkeit vorgegebener Bahnen derartiger Objekte, erfolgen.

Bezugszeichenliste

| ( 1 ) | Vorrichtung |
|---|---|
| (2) | Erfassungsbereich |
| (3) | Beleuchtungseinheit |
| (4) | Kamera |
| (5) | Sender |
| (6) | Lichtstrahlen |
| (7) | Sendeoptik |
| (8) | CMOS-Chip |
| (9) | Empfangsoptik |
| (10) | Auswerteeinheit |
| (11,11') | Rechnereinheit |
| (12) | Ausgangsschaltung |
| (13) | Schaltausgang |
| (14) | Warnausgang |
| (15) | Flurförderfahrzeug |
| (16) | Schutzfeld |
| (17) | Warnzone |

| c | Lichtgeschwindigkeit |
|---|---|
| d | Distanz des Objekts zur Vorrichtung |
| $t_1, t_2, t_a, t_b$ | Zeitpunkte |
| T | Pulsdauer |
| U | Äusgangssignal |
| $U_1, U_2$ | Messpunkte |
| $\Delta T$ | Zeitdauer |

**Patentansprüche**

**1.** Vorrichtung (1) zur Überwachung eines Erfassungsbereichs (2) an einem Arbeitsmittel, mit einer Lichtstrahlen (6) emittierenden Beleuchtungseinheit (3) zur Beleuchtung des Erfassungsbereichs (2), mit einer Kamera (4) zur Ermittlung dreidimensionaler Bilder des Erfassungsbereichs (2) und mit einer Auswerteeinheit (10) mittels derer wenigstens ein auf das Arbeitsmittel geführter Schaltausgang (13) angesteuert wird, so dass das Arbeitsmittels nur dann in Betrieb gesetzt ist, falls sich kein Objekt im Erfassungsbereich (2) befindet, **dadurch gekennzeichnet, dass** die Kamera (4) eine matrixförmige Anordnung von Empfangselementen aufweist, deren Ausgangssignale in der Auswerteeinheit (10) ausgewertet werden, wobei für jedes Empfangselement ein Distanzwert aus der Lichtlaufzeit der von der Beleuchtungseinheit (3) emittierten und aus dem Erfassungsbereich (2) zurückreflektierten Lichtstrahlen (6) ermittelt wird, und dass die von der Beleuchtungseinheit (3) und der Kamera (4) gebildete Sensoreinheit einen einkanaligen Aufbau aufweist, wobei die Sensoreinheit durch eine Eigenfehlerkontrolle selbstsicher ist, wobei bei einer nach einem Puls-Laufzeit-Verfahren arbeitenden Sensoreinheit zur Eigenfehlerkontrolle die vom Sender (5) emittierten Lichtimpulse um vorgegebene Zeiten verzögert werden und die **dadurch** veränderten Distanzwerte der Empfangselemente ausgewertet werden, oder bei einer nach dem Phasenmessverfahren arbeitenden Sensoreinheit zur Eigenfehlerkontrolle die Phase der den Lichtstrahlen (6) aufgeprägten Amplitudenmodulation verschoben wird und die **dadurch** veränderten Distanzwerte der Empfangselemente ausgewertet werden.

2. Vorrichtung nach Anspruch 1, **dadurch gekennzeichnet, dass** die Kamera (4) einen CCD-Chip oder CMOS-Chip (8) mit einer rechteckigen oder quadratischen Anordnung von Empfangselementen aufweist.

3. Vorrichtung nach einem der Ansprüche 1 oder 2, **dadurch gekennzeichnet, dass** die Beleuchtungseinheit (3) wenigstens einen Lichtstrahlen (6) emittierenden Sender (5) und eine diesem nachgeordnete Sendeoptik (7) aufweist.

4. Vorrichtung nach Anspruch 3, **dadurch gekennzeichnet, dass** der Sender (5) der Beleuchtungseinheit (3) von einer Leuchtdiode oder einer Laserdiode gebildet ist.

5. Vorrichtung nach einem der Ansprüche 1 - 4, **dadurch gekennzeichnet, dass** die Ermittlung von Distanzwerten nach einem Puls-Laufzeit-Verfahren erfolgt.

6. Vorrichtung nach Anspruch 5, **dadurch gekennzeichnet, dass** der Sender (5) Lichtstrahlen (6) in Form von Lichtimpulsen emittiert.

7. Vorrichtung nach einem der Ansprüche 1 - 4, **dadurch gekennzeichnet, dass** die Ermittlung von Distanzwerten nach einem Phasenmessverfahren erfolgt.

8. Vorrichtung nach Anspruch 7, **dadurch gekennzeichnet, dass** den vom Sender (5) emittierten Lichtstrahlen (6) eine Amplitudenmodulation mit wenigstens einer vorgegebenen Modulationsfrequenz aufgeprägt ist.

9. Vorrichtung nach einem der Ansprüche 1 - 8, **dadurch gekennzeichnet, dass** in der Auswerteeinheit (10) eine Unterscheidung von sicherheitskritischen Objekten und nicht sicherheitskritischen Objekten erfolgt, und dass über die Auswerteeinheit (10) das Arbeitsmittel nur dann in Betrieb gesetzt wird, falls sich kein sicherheitskritisches Objekt im Erfassungsbereich (2) befindet.

10. Vorrichtung nach Anspruch 9, **dadurch gekennzeichnet, dass** in einem Einlernvorgang nicht sicherheitskritische Objekte eingelernt und in der Auswerteeinheit (10) abgespeichert werden.

11. Vorrichtung nach Anspruch 10, **dadurch gekennzeichnet, dass** während des Einlernvorgangs Konturen von nicht sicherheitskritischen Objekten eingelernt werden.

12. Vorrichtung nach einem der Ansprüche 10 oder 11, **dadurch gekennzeichnet, dass** während des Einlernvorganges Bahnbewegungen von nicht sicherheitskritischen Objekten eingelernt werden.

13. Vorrichtung nach einem der Ansprüche 1 - 12, **dadurch gekennzeichnet, dass** der Erfassungsbereich (2) in wenigstens eine Schutzzone und in wenigstens einen nicht sicherheitskritischen Bereich unterteilbar ist, wobei nur Objekterfassungen in dem nicht sicherheitskritischen Bereich nicht zu einem Außerbetriebsetzen des Arbeitsmittels führen.

14. Vorrichtung nach Anspruch 13, **dadurch gekennzeichnet, dass** wenigstens ein Teil eines nicht sicherheitskritischen Bereichs eine Warnzone (17) bildet, wobei bei einer Objekterfassung in der Warnzone (17) über die Auswerteeinheit (10) ein Warnsignal generiert wird.

15. Vorrichtung nach einem der Ansprüche 13 oder 14, **dadurch gekennzeichnet, dass** die nicht sicherheitskritischen Bereiche in Abhängigkeit der Positionen von sicherheitskritischen Objekten oder nicht sicherheitskritischen Objekten innerhalb des Erfassungsbereichs (2) definiert sind.

16. Vorrichtung nach einem der Ansprüche 13 oder 14, **dadurch gekennzeichnet, dass** die nicht sicherheitskritischen Bereiche in Abhängigkeit von Signalen externer Sensoren definiert sind.

17. Vorrichtung nach einem der Ansprüche 1 bis 16, **dadurch gekennzeichnet, dass** die Auswerteeinheit (10) einen zweikanaligen Aufbau aufweist.

18. Vorrichtung nach Anspruch 17, **dadurch gekennzeichnet, dass** die Auswerteeinheit (10) zwei sich gegenseitig kontrollierende Rechnereinheiten (11, 11') aufweist.

19. Vorrichtung nach einem der Ansprüche 1 bis 18, **dadurch gekennzeichnet, dass** mit dieser ein Erfassungsbereich (2) vor einem mobilen Arbeitsmittel überwacht wird.

20. Vorrichtung nach Anspruch 19, **dadurch gekennzeichnet, dass** das mobile Arbeitsmittel von einem Roboter oder einem Transportfahrzeug gebildet ist.

## Claims

1. Device (1) for monitoring a detection region (2) at working means, comprising an illuminating unit (3), which emits light beams (6), for illumination of the detection region (2), a camera (4) for determination of three-dimensional images of the detection region (2) and an evaluating unit (10), by means of which at least one switching output (13), which is carried on the working means, is controlled so that the working means is placed in operation only if no object is located in the detection region (2), **characterised in that** the camera (4) comprises a matrix-shaped arrangement of receiving elements, the output signals of which are evaluated in the evaluating unit (10), wherein for each receiving element a distance value is determined from the light transit time of the light beams (6) emitted by the illuminating unit (3) and reflected back from the detection region (2), and that the sensor unit formed by the illuminating unit (3) and the camera (4) has a single-channel construction, wherein the sensor unit is self-protecting by a self-checking for faults, wherein in the case of a sensor unit operating in accordance with a pulse transit time method the light pulses emitted by the transmitter (5) are delayed by predetermined times for the fault self-checking and the thereby-changed distance values of the receiving elements are evaluated or in the case of a sensor unit operating according to the phase measuring method the phase of the amplitude modulation imposed on the light beams (6) is shifted for the fault self-checking and the thereby-changed distance values of the receiving elements are evaluated.

2. Device according to claim 1, **characterised in that** the camera (4) comprises a CCD chip or CMOS chip (8) with a rectangular or square arrangement of receiving elements.

3. Device according to one of claims 1 and 2, **characterised in that** the illuminating unit (3) comprises at least one transmitter (5) emitting light beams (6) and a transmission optical system (7) arranged downstream thereof.

4. Device according to claim 3, **characterised in that** the transmitter (5) of the illuminating unit (3) is formed by a light-emitting diode or a laser diode.

5. Device according to any one of claims 1 to 4, **characterised in that** the determination of distance values is carried out in accordance with a pulse transit time method.

6. Device according to claim 5, **characterised in that** the transmitter (5) emits light beams (6) in the form of light pulses.

7. Device according to any one of claims 1 to 4, **characterised in that** the determination of distance values is carried out in accordance with a phase measuring method.

8. Device according to claim 7, **characterised in that** an amplitude modulation with at least one predetermined modulation frequency is imposed on the light beams (6) emitted by the transmitter (5).

9. Device according to any one of claims 1 to 8, **characterised in that** a differentiation of safety-critical objects and non-safety-critical objects is carried out in the evaluating unit (10) and that the working means is placed in operation by way of the evaluating unit (10) only if no safety-critical object is located in the detection region (2).

10. Device according to claim 9, **characterised in that** non-safety-critical objects are learnt in a learning process and are stored in the evaluating unit (10).

11. Device according to claim 10, **characterised in that** contours of non-safety-critical objects are learnt during the learning process.

12. Device according to one of claims 10 and 11, **characterised in that** path movements of non-safety-critical objects are learnt during the learning process.

13. Device according to any one of claims 1 to 12, **characterised in that** the detection region (2) is subdivisible into at least one protection zone and at least one non-safety-critical region, wherein only object detections in the non-safety-critical region do not lead to taking the working means out of operation.

14. Device according to claim 13, **characterised in that** at least a part of a non-safety-critical region forms a warning zone (17), wherein in the case of object detection in the warning zone (17) a warning signal is generated by way of the evaluating unit (10).

15. Device according to one of claims 13 and 14, **characterised in that** the non-safety-critical regions are defined in dependence on the positions of safety-critical objects or non-safety-critical objects within the detection region (2).

16. Device according to one of claims 13 and 14, **char-**

**acterised in that** the non-safety-critical regions are defined in dependence on signals of external sensors.

17. Device according to any one of claims 1 to 16, **characterised in that** the evaluating unit (10) has a two-channel construction.

18. Device according to claim 17, **characterised in that** the evaluating unit (10) comprises two mutually controlling computer units (11,11').

19. Device according to any one of claims 1 to 18, **characterised in that** a detection region (2) in front of a mobile working means is monitored by this.

20. Device according to claim 19, **characterised in that** the mobile working means is formed by a robot or a transport vehicle.

**Revendications**

1. Dispositif (1) pour surveiller une zone de couverture (2) sur un outil de travail, avec une unité d'éclairage (3) émettant des rayons lumineux (6) pour éclairer la zone de couverture (2), avec une caméra (4) pour déterminer des images tridimensionnelles de la zone de couverture (2) et avec une unité d'évaluation (10) au moyen de laquelle au moins une sortie de commutation (13) menée sur l'outil de travail est commandée, de sorte que l'outil de travail n'est mis en service que si aucun objet ne se trouve dans la zone de couverture (2), **caractérisé en ce que** la caméra (4) présente un agencement matriciel d'éléments de réception dont les signaux de sortie sont évalués dans l'unité d'évaluation (10), une valeur de distance étant déterminée pour chaque élément de réception à partir du temps de parcours de la lumière des rayons lumineux (6) émis par l'unité d'éclairage (3) et réfléchis par la zone de couverture (2), et que l'unité de détection formée par l'unité d'éclairage (3) et la caméra (4) présente une structure à un canal, l'unité de détection étant à sécurité intégrée par un contrôle d'erreurs intrinsèque, sachant que dans le cas d'une unité de détection travaillant selon un procédé basé sur le temps de parcours d'impulsions, pour le contrôle d'erreurs intrinsèque les impulsions lumineuses émises par l'émetteur (5) sont retardées de temps prédéfinis et les valeurs de distance modifiées de ce fait des éléments de réception sont évaluées, ou dans le cas d'une unité de détection travaillant selon le procédé de mesure de phase, pour le contrôle d'erreurs intrinsèque la phase de la modulation d'amplitude appliquée aux rayons lumineux (6) est décalée et les valeurs de distance modifiées de ce fait des éléments de réception sont évaluées.

2. Dispositif selon la revendication 1, **caractérisé en ce que** la caméra (4) présente une puce CCD ou une puce CMOS (8) avec une disposition rectangulaire ou carrée des éléments de réception.

3. Dispositif selon l'une des revendications 1 ou 2, **caractérisé en ce que** l'unité d'éclairage (3) présente au moins un émetteur (5) émettant des rayons lumineux (6) et une optique d'émission (7) placée en aval de celui-ci.

4. Dispositif selon la revendication 3, **caractérisé en ce que** l'émetteur (5) de l'unité d'éclairage (3) est formé par une diode électroluminescente ou une diode laser.

5. Dispositif selon l'une des revendications 1 à 4, **caractérisé en ce que** la détermination des valeurs de distance s'effectue selon un procédé basé sur le temps de parcours d'impulsions.

6. Dispositif selon la revendication 5, **caractérisé en ce que** l'émetteur (5) émet des rayons lumineux (6) sous la forme d'impulsions lumineuses.

7. Dispositif selon l'une des revendications 1 à 4, **caractérisé en ce que** la détermination des valeurs de distance s'effectue selon un procédé de mesure de phase.

8. Dispositif selon la revendication 7, **caractérisé en ce qu'**une modulation d'amplitude à au moins une fréquence de modulation prédéfinie est appliquée aux rayons lumineux (6) émis par l'émetteur (5).

9. Dispositif selon l'une des revendications 1 à 8, **caractérisé en ce qu'**une distinction entre objets critiques pour la sécurité et objets non critiques pour la sécurité est effectuée dans l'unité d'évaluation (10) et que l'outil de travail n'est mis en service par l'intermédiaire de l'unité d'évaluation (10) que si aucun objet critique pour la sécurité ne se trouve dans la zone de couverture (2).

10. Dispositif selon la revendication 9, **caractérisé en ce que** dans un processus d'apprentissage, des objets non critiques pour la sécurité sont appris et enregistrés dans l'unité d'évaluation (10).

11. Dispositif selon la revendication 10, **caractérisé en ce que** pendant le processus d'apprentissage, des contours d'objets non critiques pour la sécurité sont appris.

12. Dispositif selon l'une des revendications 10 ou 11, **caractérisé en ce que** pendant le processus d'apprentissage, des trajectoires d'objets non critiques pour la sécurité sont apprises.

**13.** Dispositif selon l'une des revendications 1 à 12, **caractérisé en ce que** la zone de couverture (2) peut être divisée en au moins une zone de protection et en au moins une zone non critique pour la sécurité, seules des détections d'objet dans la zone non critique pour la sécurité n'entraînant pas une mise hors service de l'outil de travail.

**14.** Dispositif selon la revendication 13, **caractérisé en ce qu'**au moins une partie d'une zone non critique pour la sécurité forme une zone d'avertissement (17), un signal d'avertissement étant généré par l'intermédiaire de l'unité d'évaluation (10) en cas de détection d'objet dans la zone d'avertissement (17).

**15.** Dispositif selon l'une des revendications 13 ou 14, **caractérisé en ce que** les zones non critiques pour la sécurité sont définies en fonction des positions d'objets critiques pour la sécurité ou d'objets non critiques pour la sécurité à l'intérieur de la zone de couverture (2).

**16.** Dispositif selon l'une des revendications 13 ou 14, **caractérisé en ce que** les zones non critiques pour la sécurité sont définies en fonction de signaux de capteurs externes.

**17.** Dispositif selon l'une des revendications 1 à 16, **caractérisé en ce que** l'unité d'évaluation (10) présente une structure à deux canaux.

**18.** Dispositif selon la revendication 17, **caractérisé en ce que** l'unité d'évaluation (10) présente deux unités de calcul (11, 11') se contrôlant mutuellement.

**19.** Dispositif selon l'une des revendications 1 à 18, **caractérisé en ce qu'**il est utilisé pour surveiller une zone de couverture (2) située devant un outil de travail mobile.

**20.** Dispositif selon la revendication 19, **caractérisé en ce que** l'outil de travail mobile est formé par un robot ou un véhicule de transport.

# Fig. 1

# Fig. 2

**Fig. 3**

Sendelichtimpulse

Integrationszeitintervalle

Empfangslichtimpulse

integriertes
Ausgangssignal U

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3939191 C3
- EP 0902402 A2
- EP 1367314 A2
- US 6373557 B1